# EUROPEAN PATENT APPLICATION

(11) **EP 4 445 868 A1**
(43) Date of publication of application: **16.10.2024**
(21) Application number: 22904025.8
(22) Date of filing: 22.11.2022
(51) Int. Cl.: A61C 17/22, A61C 17/34

(54) **ELECTRIC TOOTHBRUSH**

(30) Priority: 08.12.2021 JP 2021198995
(71) Applicant: Panasonic Intellectual Property Management Co., Ltd., Osaka-shi, Osaka 540-6207 (JP)
(72) Inventor: TSUTSUI Mami, Kadoma-shi, Osaka 571-0057 (JP); SANEMATSU Wataru, Kadoma-shi, Osaka 571-0057 (JP); SHINODA Hiroki, Kadoma-shi, Osaka 571-0057 (JP)
(74) Representative: Grünecker Patent- und Rechtsanwälte PartG mbB
(86) International application number: PCT/JP2022/043243
(87) International publication number: WO 2023/106094

(57) **Abstract**

The present disclosure provides an electric toothbrush that improves a dirt removing effect. Electric toothbrush (1) according to the present disclosure includes: head (10) including brush part (10b); drive unit (21) that operates head (10); input unit (24) that identifies a type or a position of a tooth to be brushed by brush part (10b); and controller (23) that determines which classification based on a specific criterion the type or the position of the tooth identified by input unit (24) belongs to, and controls drive unit (21) to change an operation of head (10) according to the classification.

## Description

### TECHNICAL FIELD

The present disclosure relates to an electric toothbrush.

### BACKGROUND ART

Conventionally, there is an electric toothbrush in which a head including a brush part automatically operates. PTL 1 discloses a technique relevant to an electric toothbrush that detects and displays a relative position with respect to teeth of a user who is assumed to be a child to allow the user to recognize whether a brushing operation has been correctly performed.

### Citation List

### Patent Literature

PTL 1: Japanese Translation of PCT International Application No. 2012-526597

### SUMMARY OF THE INVENTION

### Technical problem

An electric toothbrush disclosed in PTL 1 includes means for detecting teeth of a user. However, information obtained by the detection means is merely used to indicate a result of a user's brushing operation. Therefore, in the electric toothbrush, it is difficult to improve a dirt removing effect regardless of the operation ability of the user.

The present disclosure has been made in view of such a problem of the conventional technique. An object of the present disclosure is to provide an electric toothbrush that improves a dirt removing effect.

### Solution to problem

In order to solve the above problem, an electric toothbrush according to one aspect of the present disclosure includes: a head including a brush part; a drive unit that operates the head; an input unit that identifies a type or a position of a tooth to be brushed by the brush part; and a controller that determines which classification based on a specific criterion the type or the position of the tooth identified by the input unit belongs to, and controls the drive unit to change an operation of the head according to the classification.

### Advantageous effect of invention

According to the present disclosure, it is possible to provide an electric toothbrush that improves a dirt removing effect.

### BRIEF DESCRIPTION OF THE DRAWINGS

Fig. 1 is a side view illustrating an electric toothbrush according to a first exemplary embodiment of the present disclosure.
Fig. 2A is a conceptual diagram in a case where a roll angle of a brush part with respect to a tooth is 90°.
Fig. 2B is a conceptual diagram in a case where the roll angle of the brush part with respect to the tooth is 60°.
Fig. 3 is a conceptual diagram illustrating a pressing direction of a brush part against a tooth.
Fig. 4A is a graph of a plaque removal rate with respect to a roll angle on a sixth buccal side of a lower jaw.
Fig. 4B is a graph of the plaque removal rate with respect to the roll angle on a fifth buccal side of the lower jaw.
Fig. 4C is a graph of the plaque removal rate with respect to the roll angle on a third buccal side of the lower jaw.
Fig. 4D is a graph of the plaque removal rate with respect to the roll angle on a first buccal side of the lower jaw.
Fig. 5A is a graph of the plaque removal rate with respect to the roll angle on a sixth lingual side of the lower jaw.
Fig. 5B is a graph of the plaque removal rate with respect to the roll angle on a fifth lingual side of the lower jaw.
Fig. 5C is a graph of the plaque removal rate with respect to the roll angle on a third lingual side of the lower jaw.
Fig. 5D is a graph of the plaque removal rate with respect to the roll angle on a first lingual side of the lower jaw.
Fig. 6A is a graph of a plaque removal rate against a pressing force on a sixth buccal side of the lower jaw.
Fig. 6B is a graph of the plaque removal rate against the pressing force on a fifth buccal side of the lower jaw.
Fig. 6C is a graph of the plaque removal rate against the pressing force on a third buccal side of the lower jaw.
Fig. 6D is a graph of the plaque removal rate against the pressing force on a first buccal side of the lower jaw.
Fig. 7A is a graph of the plaque removal rate against the pressing force on a sixth lingual side of the lower jaw.
Fig. 7B is a graph of the plaque removal rate against the pressing force on a fifth lingual side of the lower jaw.
Fig. 7C is a graph of the plaque removal rate against the pressing force on a third lingual side of the lower jaw.
Fig. 7D is a graph of the plaque removal rate against the pressing force on a first lingual side of the lower jaw.
Fig. 8 is a side view illustrating an electric toothbrush according to a second exemplary embodiment of the present disclosure.

### DESCRIPTION OF EMBODIMENT

Hereinafter, exemplary embodiments will be described in detail with reference to the drawings. Unnecessary detailed description may not be described. For example, detailed descriptions of already well-known matters or redundant descriptions of substantially the same configuration may be omitted. Note that, the accompanying drawings and the following description are merely presented to help those skilled in the art fully understand the present disclosure, and are not intended to limit the subject matters described in the scope of claims.

### (First exemplary embodiment)

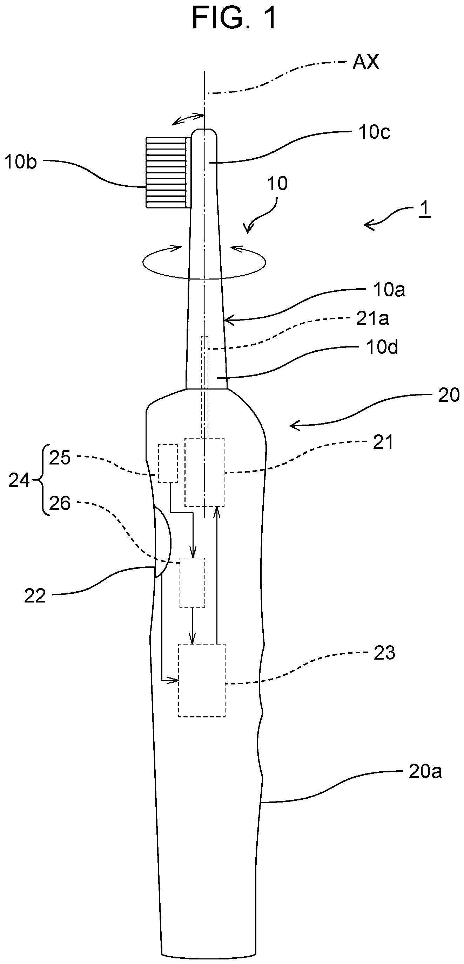

Fig. 1 is a side view illustrating electric toothbrush 1 according to a first exemplary embodiment. Electric toothbrush 1 includes head 10 including brush part 10b, and handle part 20 configured to be gripped by a user. Electric toothbrush 1 automatically performs a tooth brushing action or an auxiliary action thereof by operating head 10 with respect to handle part 20.

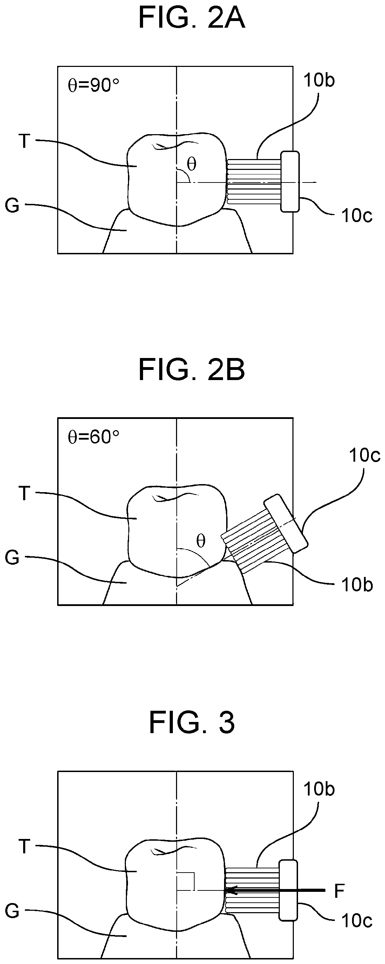

Head 10 is a movable part of electric toothbrush 1. Head 10 includes head body 10a and brush part 10b. Head body 10a is, for example, a rod-shaped body made of resin. Axial direction AX of head body 10a is synonymous with a longitudinal direction of head 10. Distal end portion 10c, which is one end portion of head body 10a, is a portion that enters an oral cavity of a user when brushing teeth, and is provided with brush part 10b. Root portion 10d, which is the other end portion of head body 10a, is connected to drive unit 21 in handle part 20 via drive shaft 21a. Brush part 10b is brought into contact with tooth T or gingiva G of the user at the time of brushing the teeth (see Fig. 2A, which will be described later).

Handle part 20 is a fixing part in electric toothbrush 1. Handle part 20 includes drive unit 21, operation unit 22, and controller 23 inside handle body 20a.

Drive unit 21 is a power generation unit for operating head 10. Drive unit 21 is, for example, a motor connected to drive shaft 21a extending toward the inside of head body 10a. Head body 10a, that is, head 10 can operate as follows by driving drive unit 21. First, head 10 vibrates in the axial direction of head body 10a as a tooth brushing action. Furthermore, head 10 rotates so as to change a roll angle about axis AX in the axial direction of head body 10a as a central axis in order to position brush part 10b with respect to tooth T to be brushed (see Fig. 2A, which will be described later). Furthermore, head 10 moves so as to apply pressure to a surface or gingiva G of tooth T (see Fig. 2A, which will be described later) as an operation of pressing brush part 10b against tooth T to be brushed. That is, drive unit 21 may use a linear motor, a rotation motor, a motor including a swing mechanism, or the like that can operate head 10 as described above.

Operation unit 22 is a pressing button partially exposed from the inside to the outside of handle body 20a. Operation unit 22 is electrically connected to controller 23. When the user presses operation unit 22, it is possible to switch on/off of a power supply or whether or not to execute the operation control of head 10 in the present exemplary embodiment described in detail below.

Controller 23 is, for example, a control board including a storage, and is electrically connected to drive unit 21. Controller 23 controls the operation of head 10 by driving drive unit 21 on the basis of a command from operation unit 22.

Furthermore, electric toothbrush 1 also includes input unit 24 that identifies a type or a position of tooth T to be brushed by brush part 10b. In the present exemplary embodiment, input unit 24 includes sensor 25 and detection unit 26.

Sensor 25 detects a physical quantity required to identify the type or the position of tooth T to be brushed. Sensor 25 may be, for example, an image sensor that images tooth T, a distance sensor that detects a distance from tooth T, or an acceleration sensor or a gyro sensor that detects a movement distance to tooth T or an attitude of head 10 with respect to tooth T. Note that the installation position of sensor 25 illustrated in Fig. 1 is an example. Sensor 25 may be installed inside handle body 20a as illustrated in Fig. 1 or may be installed on head 10 according to a general use mode.

Detection unit 26 receives an output of sensor 25, identifies the type or the position of tooth T to be detected, and transmits the type or the position to controller 23. Operation control of head 10 by controller 23 based on the information obtained from detection unit 26 will be described later.

Although not illustrated, electric toothbrush 1 further includes, in handle part 20, a battery housing that houses a battery as a power source of drive unit 21.

Next, an operation of electric toothbrush 1 will be described.

When the user grips electric toothbrush 1 and presses operation unit 22, electric toothbrush 1 is powered on, and controller 23 starts a series of operations of head 10. Hereinafter, it is assumed that the user inserts brush part 10b into the oral cavity immediately before or immediately after the start of the operation of head 10.

Controller 23 drives drive unit 21 in accordance with turning on of the power supply, and as a tooth brushing action, vibrates drive shaft 21a as a reciprocating motion along axis AX. Since a distal end portion of drive shaft 21a is connected to head body 10a, head 10 also vibrates in the axial direction of head body 10a in accordance with the vibration of drive shaft 21a. Note that, as the tooth brushing action of head 10, not only the reciprocating motion along axis AX but also, for example, a rotational reciprocating motion about axis AX as a central axis may be performed.

Furthermore, simultaneously with the tooth brushing action or immediately before the tooth brushing action, controller 23 causes drive unit 21 to perform one or both of an operation of positioning brush part 10b and an operation of pressing brush part 10b against tooth T to be brushed as follows.

First, controller 23 causes input unit 24 to identify a type or a position of tooth T to be brushed in common in both the positioning operation and the pressing operation. In input unit 24, sensor 25 detects tooth T to be brushed, and transmits a result of the detection to detection unit 26. Detection unit 26 identifies the type or the position of tooth T to be brushed based on an output of sensor 25, and transmits a result of the identification to controller 23.

Here, the type of tooth T to be brushed refers to which tooth T among a plurality of teeth T arranged as a dentition in the oral cavity. Specifically, in the case of permanent teeth, the type of tooth T refers to any one of a central incisor (front tooth; No. 1), a lateral incisor (front tooth; No. 2), a canine (No. 3), a first premolar (No. 4), a second premolar (No. 5), a first molar (No. 6), a second molar (No. 7), and a third molar (wisdom tooth; No. 8).

Furthermore, the position of tooth T to be brushed refers to any position of a buccal side portion, or a lingual or palate side portion of tooth T to be brushed. Alternatively, the position of tooth T to be brushed refers to a tooth on an upper jaw or a tooth on a lower jaw based on the determination as to whether tooth T to be brushed is on the upper jaw or the lower jaw. Alternatively, the position of tooth T to be brushed refers to a tooth on a left side or a tooth on a right side based on the determination as to whether tooth T to be brushed is on the left side or the right side.

Next, controller 23 determines which classification based on a specific criterion the type or the position of tooth T identified by input unit 24 belongs to.

Here, controller 23 determines whether the type of tooth T identified by input unit 24 belongs to an incisor or a tooth other than the incisor. Here, the incisor refers to a central incisor or a lateral incisor. The tooth other than the incisor refers to a tooth other than the central incisor and the lateral incisor.

Furthermore, controller 23 may determine whether the position of tooth T to be brushed identified by input unit 24 belongs to the buccal side, or the lingual side or the palate side.

Moreover, controller 23 may determine whether tooth T identified by input unit 24 belongs to a tooth on the upper jaw or a tooth on the lower jaw. Alternatively, controller 23 may determine whether tooth T identified by input unit 24 belongs to a tooth on the identical side as the hand of the user gripping handle part 20 or belongs to a tooth on the opposite side.

Next, controller 23 controls drive unit 21 to change the operation of head 10 according to the classification on the basis of the determination result as to which classification tooth T identified by input unit 24, that is, the type or the position of tooth T to be brushed belongs to.

Here, as the operation of head 10 that changes according to the classification of the type or the position of tooth T, for example, the following operation can be considered.

The first operation of head 10 is an operation of positioning brush part 10b with respect to tooth T to be brushed. Specifically, drive unit 21 rotates head body 10a about axis AX as a central axis to change roll angle θ of head 10, that is, brush part 10b.

Figs. 2A and 2B are conceptual diagrams illustrating an example of roll angle θ when a brush surface of brush part 10b is brought into contact with a side surface of tooth T and gingiva G. Here, electric toothbrush 1 at the time of brushing teeth is maintained in an attitude in which the longitudinal direction of brush part 10b in the longitudinal direction of head 10 is approximately parallel to a dentition direction of tooth T.

Fig. 2A is a diagram when roll angle θ is 90°. In this case, the brush surface of brush part 10b abuts on the side surface of tooth T perpendicularly to a direction in which tooth T grows with respect to gingiva G, specifically, a direction approximately along a tooth axis.

Fig. 2B is a diagram when roll angle θ is 60°. In this case, the brush surface of brush part 10b abuts on tooth T and gingiva G in a direction approximately toward a tooth neck or a periodontal pocket.

The second operation of head 10 is an operation of pressing brush part 10b against tooth T to be brushed. Specifically, drive unit 21 moves head body 10a toward the surface or gingiva G of tooth T to change the pressure applied to the surface or gingiva G of tooth T. Hereinafter, the pressure applied to the surface or gingiva G of tooth T is referred to as a pressing force.

Fig. 3 is a conceptual diagram illustrating a pressing direction when brush part 10b applies pressing force F to the side surface of tooth T. Here, at the time of brushing teeth, the pressing direction of pressing force F is a direction from the brush surface of brush part 10b toward the side surface of tooth T in a direction substantially perpendicular to the direction along the tooth axis.

Under the control of controller 23, electric toothbrush 1 performs the tooth brushing action in a state in which at least one selected from the group consisting of roll angle θ and pressing force F is set according to the classification of the type or the position of tooth T to be brushed.

Next, roll angle θ set according to the classification of the type or the position of tooth T to be brushed will be described.

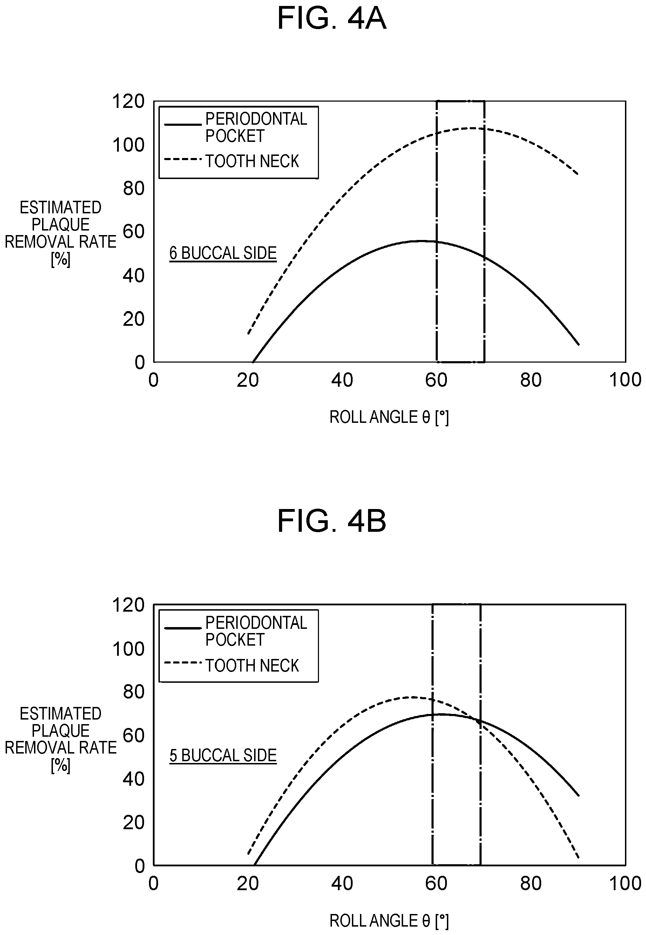

Figs. 4A to 4D are graphs illustrating an estimated plaque removal rate [%] with respect to roll angle θ [°] by applying electric toothbrush 1 to a buccal side of each type of tooth T in a lower jaw model. The estimated plaque removal rate is a plaque removal rate estimated from a regression equation based on multiple regression analysis. In Figs. 4A to 4D, the estimated plaque removal rate in the periodontal pocket and the estimated plaque removal rate in the tooth neck are shown together. Furthermore, in Figs. 4A to 4D, a range of roll angle θ that can take the optimum value of the estimated plaque removal rate is indicated by a frame of a one-dot chain line.

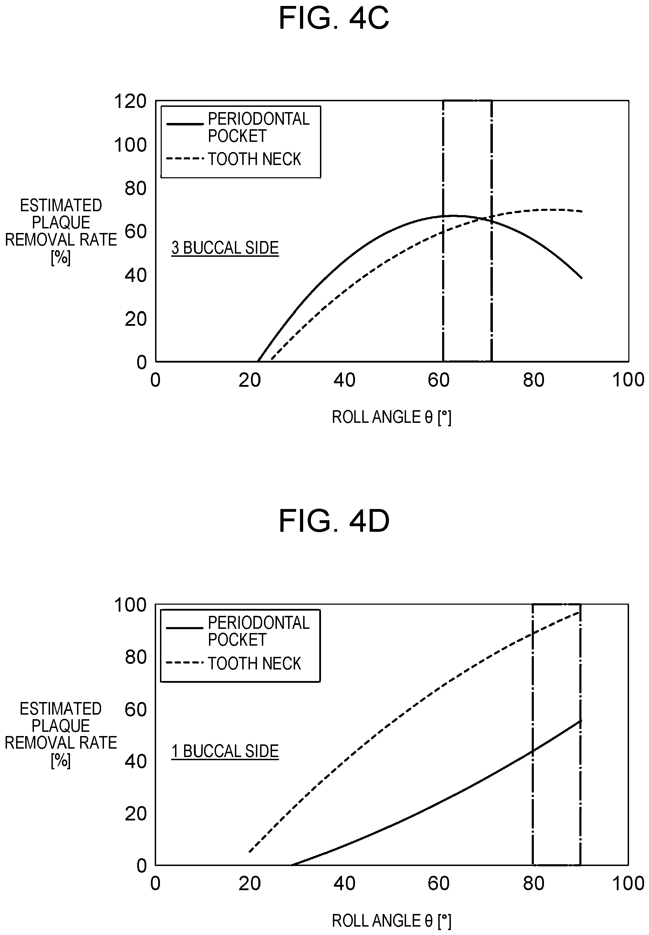

Fig. 4A is a graph of the estimated plaque removal rate in a case where the type and the position of tooth T to be brushed are on the sixth buccal side of the lower jaw. In Fig. 4A, in order to show a difference from other graphs, it is abbreviated as "6 buccal side". Fig. 4B is a graph of the estimated plaque removal rate when the type and the position of tooth T to be brushed are on the fifth buccal side of the lower jaw. In Fig. 4B, it is abbreviated as "5 buccal side". Fig. 4C is a graph of the estimated plaque removal rate when the type and the position of tooth T to be brushed are on the third buccal side of the lower jaw. In Fig. 4C, it is abbreviated as "3 buccal side". Fig. 4D is a graph of the estimated plaque removal rate in a case where the type and the position of tooth T to be brushed are on the first buccal side of the lower jaw. In Fig. 4D, it is abbreviated as "1 buccal side".

Here, when the graphs of Figs. 4A to 4D are compared with each other, the estimated plaque removal rates according to Figs. 4A to 4C in which the type of tooth T to be brushed is classified as other than an incisor can take optimum values when roll angle θ is in a range of approximately 60° to 70°. However, the estimated plaque removal rate according to Fig. 4D in which the type of tooth T to be brushed is classified as an incisor does not have a peak for both the periodontal pocket and the tooth neck, and thus, can take an optimum value when roll angle θ is approximately 90°. From such results, it is presumed that by changing the setting of roll angle θ according to the classification of whether the type of tooth T to be brushed is an incisor or a tooth other than the incisor, the estimated plaque removal rate can be set to an optimum value for a plurality of teeth T in the oral cavity as a whole, as compared with the case where roll angle θ is not changed according to the classification.

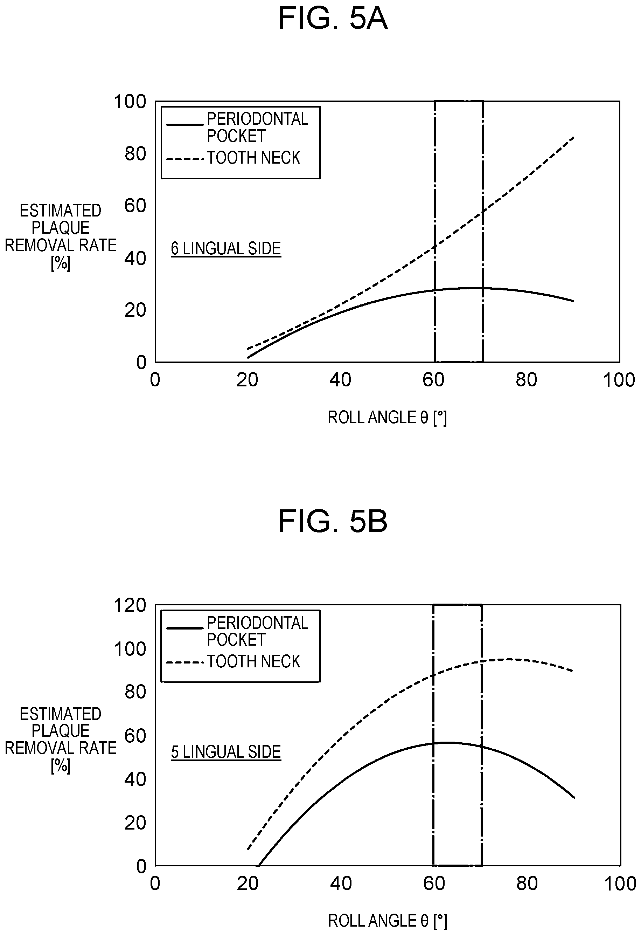

Figs. 5A to 5D are graphs illustrating an estimated plaque removal rate [%] with respect to roll angle θ [°] by applying electric toothbrush 1 to a lingual side of each type of tooth T in the lower jaw model. The acquisition conditions of the estimated plaque removal rate are similar to those in Figs. 4A to 4D.

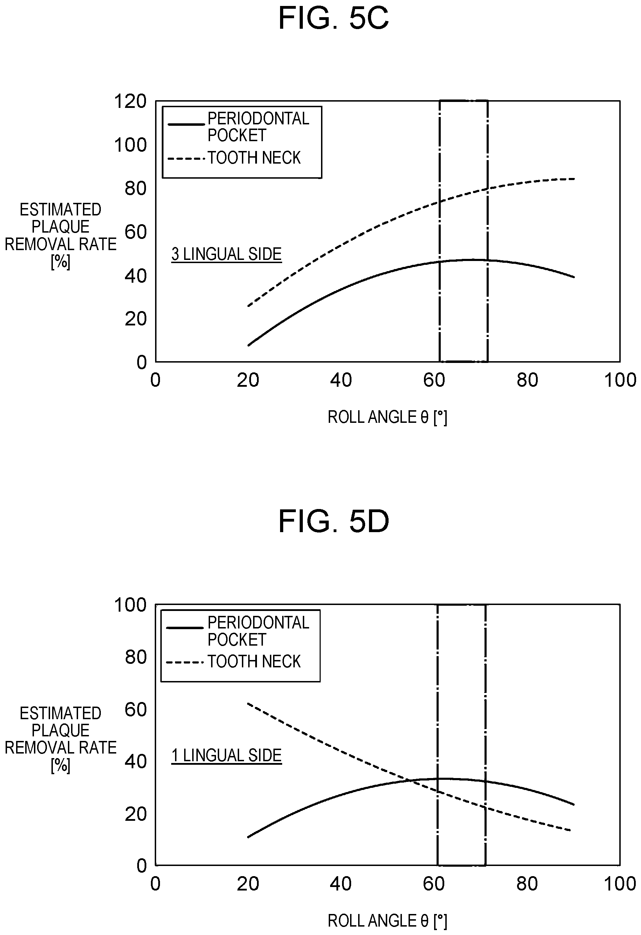

Fig. 5A is a graph of the estimated plaque removal rate when the type and the position of tooth T to be brushed are on the sixth lingual side of the lower jaw. Fig. 5B is a graph of the estimated plaque removal rate in a case where the type and the position of tooth T to be brushed are on the fifth lingual side of the lower jaw. Fig. 5C is a graph of the estimated plaque removal rate in a case where the type and the position of tooth T to be brushed are on the third lingual side of the lower jaw. Fig. 5D is a graph of the estimated plaque removal rate in a case where the type and the position of tooth T to be brushed are on the first lingual side of the lower jaw. Note that abbreviations of "6 lingual side" and the like illustrated in each of Figs. 5A to 5D are the same as those in Fig. 4A and the like.

Here, when the graphs of Figs. 5A to 5D are compared with each other, the estimated plaque removal rates according to Figs. 5A to 5C in which the type of tooth T to be brushed is classified as other than an incisor can take optimum values when roll angle θ is in a range of approximately 60° to 70°. On the other hand, the estimated plaque removal rate according to Fig. 5D in which the type of tooth T to be brushed is classified as an incisor can take an optimum value when roll angle θ is in a range of approximately 60° to 70°, similarly to the estimated plaque removal rates according to Figs. 5A to 5C. That is, even in first tooth T of the lower jaw, the estimated plaque removal rate relevant to the lingual side in Fig. 5D is different from the tendency of the estimated plaque removal rate relevant to the buccal side in Fig. 4D. From such results, it is presumed that by changing the setting of roll angle θ according to the classification of whether the position of tooth T to be brushed is on the buccal side or the lingual side, the estimated plaque removal rate can be set to an optimum value as the plurality of teeth T in the oral cavity as a whole, as compared with the case where roll angle θ is not changed according to the classification.

Furthermore, referring to all the results of Figs. 4A to 5D regarding the lower jaw, controller 23 may set roll angle θ to approximately 90° only when the type of tooth T to be brushed is an incisor and the position to be brushed is on the buccal side. On the other hand, when the type of tooth T to be brushed is other than the incisor and the position to be brushed is on the buccal side or the lingual side, controller 23 may set roll angle θ to a range of approximately 60° to 70°. Similarly, when the type of tooth T to be brushed is an incisor and the position to be brushed is on the lingual side, controller 23 may set roll angle θ to a range of approximately 60° to 70°.

Next, pressing force F set according to the classification of the type or the position of tooth T to be brushed will be described.

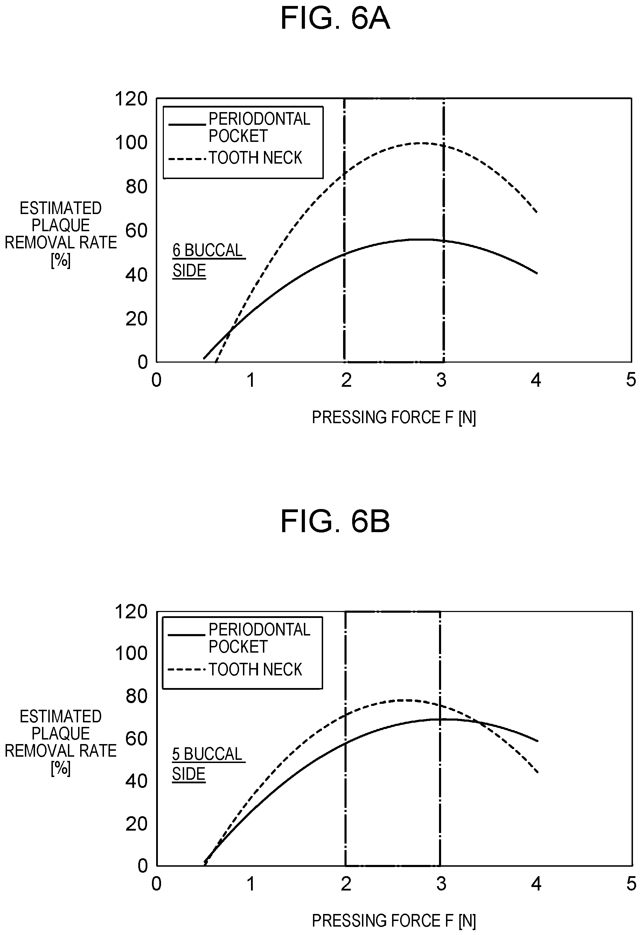

Figs. 6A to 6D are graphs illustrating an estimated plaque removal rate [%] with respect to a pressing force [N] by applying electric toothbrush 1 to the buccal side of each type of tooth T in the lower jaw model. The estimated plaque removal rate is a plaque removal rate estimated from a regression equation based on multiple regression analysis. In Figs. 6A to 6D, the estimated plaque removal rate in the periodontal pocket and the estimated plaque removal rate in the tooth neck are shown together. Furthermore, in Figs. 6A to 6D, a range of pressing force F that can take the optimum value of the estimated plaque removal rate is indicated by a frame of a one-dot chain line.

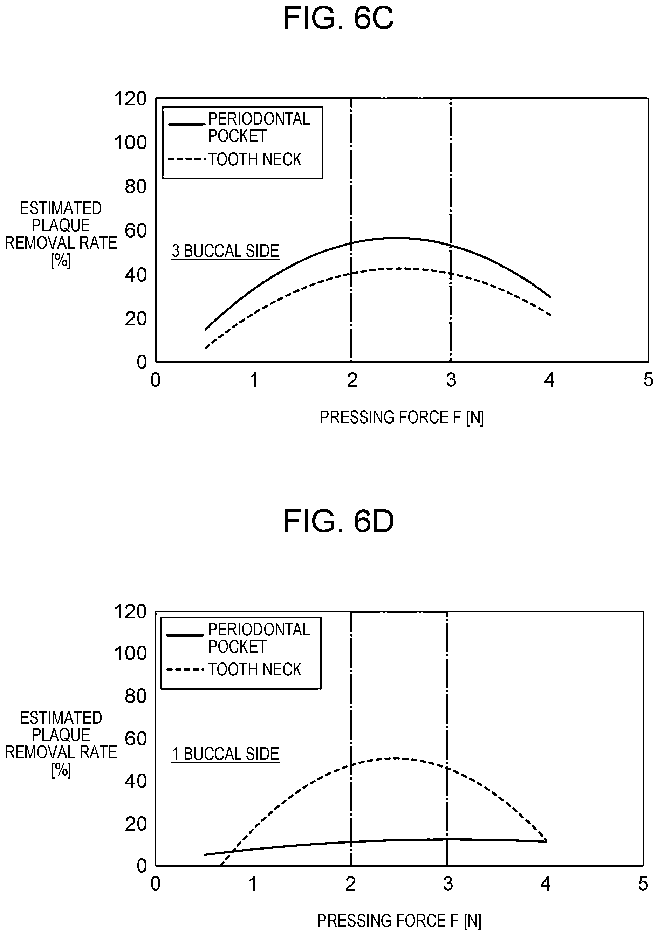

Fig. 6A is a graph of the estimated plaque removal rate in a case where the type and the position of tooth T to be brushed are on the sixth buccal side of the lower jaw. Fig. 6B is a graph of the estimated plaque removal rate when the type and the position of tooth T to be brushed are on the fifth buccal side of the lower jaw. Fig. 6C is a graph of the estimated plaque removal rate when the type and the position of tooth T to be brushed are on the third buccal side of the lower jaw. Fig. 6D is a graph of the estimated plaque removal rate in a case where the type and the position of tooth T to be brushed are on the first buccal side of the lower jaw. Note that abbreviations of "6 buccal side" and the like illustrated in each of Figs. 6A to 6D are the same as those in Fig. 4A and the like.

Here, when the graphs of Figs. 6A to 6D are compared with each other, the estimated plaque removal rates according to Figs. 6A to 6C in which the type of tooth T to be brushed is classified as other than an incisor can take optimum values when pressing force F is approximately in a range of 2N to 3N. On the other hand, the estimated plaque removal rate according to Fig. 6D in which the type of tooth T to be brushed is classified as an incisor can take an optimum value when pressing force F is approximately in a range of 2N to 3N, similarly to the estimated plaque removal rates according to Figs. 6A to 6C. That is, in a case where the position of tooth T to be brushed is on the buccal side of the lower jaw, regardless of whether the type of tooth T to be brushed is an incisor or other than the incisor, there is no significant change in the tendency of pressing force F with which the estimated plaque removal rate can take the optimum value.

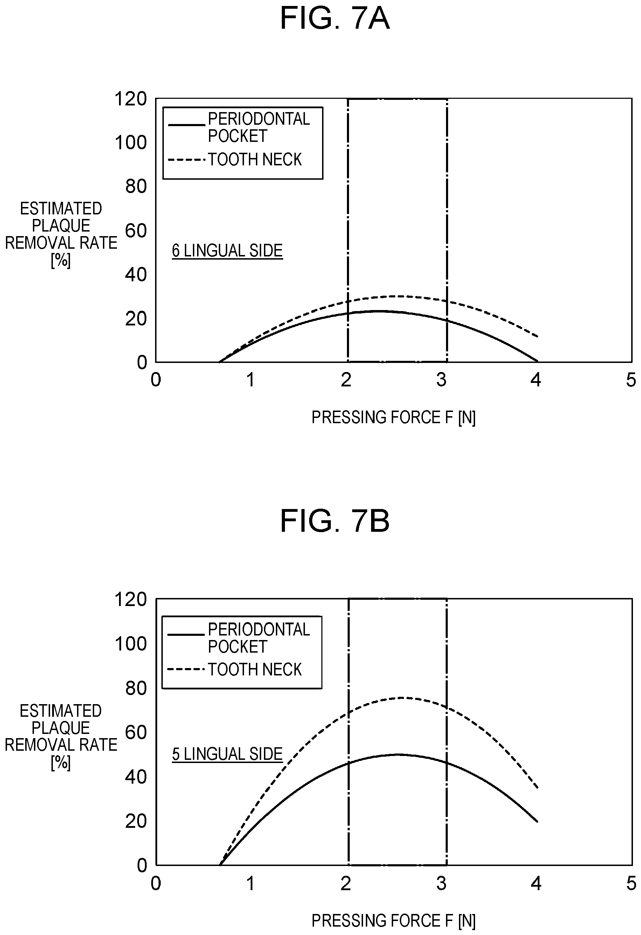

Figs. 7A to 7D are graphs illustrating an estimated plaque removal rate [%] with respect to a pressing force [N] by applying electric toothbrush 1 to the lingual side of each type of tooth T in the lower jaw model. The acquisition conditions of the estimated plaque removal rate are similar to those in Figs. 4A to 4D.

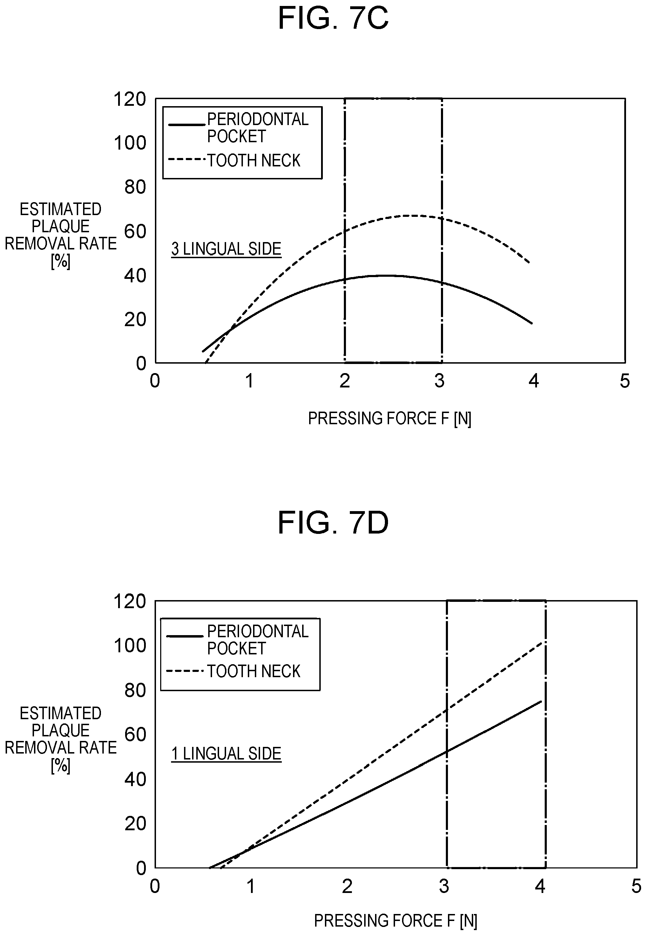

Fig. 7A is a graph of the estimated plaque removal rate when the type and the position of tooth T to be brushed are on the sixth lingual side of the lower jaw. Fig. 7B is a graph of the estimated plaque removal rate in a case where the type and the position of tooth T to be brushed are on the fifth lingual side of the lower jaw. Fig. 7C is a graph of the estimated plaque removal rate in a case where the type and the position of tooth T to be brushed are on the third lingual side of the lower jaw. Fig. 7D is a graph of the estimated plaque removal rate in a case where the type and the position of tooth T to be brushed are on the first lingual side of the lower jaw. Note that abbreviations of "6 lingual side" and the like illustrated in each of Figs. 7A to 7D are the same as those in Fig. 4A and the like.

Here, when the graphs of Figs. 7A to 7D are compared with each other, the estimated plaque removal rates according to Figs. 7A to 7C in which the type of tooth T to be brushed is classified as other than an incisor can take optimum values when pressing force F is approximately in a range of 2N to 3N. However, the estimated plaque removal rate according to Fig. 7D in which the type of tooth T to be brushed is classified as an incisor does not have a peak for both the periodontal pocket and the tooth neck, and thus, can take an optimum value when pressing force F is approximately in a range of 3N to 4N. From such results, it is presumed that by changing the setting of pressing force F according to the classification of whether the type of tooth T to be brushed is an incisor or a tooth other than the incisor, the estimated plaque removal rate can be set to an optimum value for the plurality of teeth T in the oral cavity as a whole, as compared with the case where the setting is not changed according to the classification.

Furthermore, even for first tooth T of the lower jaw, the estimated plaque removal rate relevant to the lingual side in Fig. 7D is different from the tendency of the estimated plaque removal rate relevant to the buccal side in Fig. 6D. From such results, it is presumed that by changing the setting of pressing force F according to the classification of whether the position of tooth T to be brushed is on the buccal side or the lingual side, the estimated plaque removal rate can be set to an optimum value for the plurality of teeth T in the oral cavity as a whole, as compared with the case where the setting is not changed according to the classification.

Moreover, referring to all the results of Figs. 6A to 7D regarding the lower jaw, only when the type of tooth T to be brushed is an incisor and the position to be brushed is the lingual side, controller 23 may set pressing force F to a range of approximately 3N to 4N. On the other hand, when the type of tooth T to be brushed is other than the incisor and the position to be brushed is on the buccal side or the lingual side, controller 23 may set pressing force F to a range of approximately 2N to 3N. Similarly, when the type of tooth T to be brushed is an incisor and the position to be brushed is on the buccal side, controller 23 may set pressing force F to a range of approximately 2N to 3N.

Note that Figs. 4A to 7D are examples using the lower jaw model. On the other hand, when it is effective to change the setting of roll angle θ or the like according to the classification as described above for the lower jaw, it is considered effective to change the setting of roll angle θ or the like according to the classification of whether tooth T to be brushed is in the upper jaw or the lower jaw. Note that the description that refer to the lingual side for the lower jaw can be interpreted by replacing it with the palate side for the upper jaw.

Furthermore, it is assumed that input unit 24 can determine whether tooth T to be brushed is on the left side or the right side as a position of tooth T to be brushed. In this case, according to the exemplified results of Figs. 4A to 7D, it is considered effective to change the setting of roll angle θ or the like according to the classification of whether tooth T to be brushed is on the identical side as or on the opposite side of the hand of the user gripping handle part 20.

The operation of head 10 according to the classification to which the type or the position of tooth T identified as the object to be brushed by input unit 24 belongs may be the same as or different from the operation of head 10 according to another classification to which the type or the position of another tooth T identified as the object to be brushed by input unit 24 belongs.

For example, the operation of head 10 in the classification to which a case where the type of tooth T identified as an object to be brushed by input unit 24 is a canine (No. 3) (hereinafter referred to as a case 3) belongs may be the same as or different from the operation of head 10 in the classification to which a case where the type of tooth T identified as an object to be brushed by input unit 24 is a second molar (No. 7) (hereinafter, referred to as a case 7) belongs.

Similarly, the operation of head 10 in the classification to which a case where the position of tooth T identified as an object to be brushed by input unit 24 is located in the lower jaw (hereinafter, referred to as a case L) belongs may be the same as or different from the operation of head 10 in the classification to which a case where the position of tooth T identified as an object to be brushed by input unit 24 is located in the upper jaw (hereinafter, referred to as a case of U) belongs.

Moreover, the operation of head 10 in the classification to which a case where the type of tooth T identified by input unit 24 as an object to be brushed is a canine (No. 3) and the position of tooth T is in the lower jaw (hereinafter, referred to as a case 3L) belongs may be the same as or different from the operation of head 10 in the classification to which a case where the type of tooth T identified by input unit 24 as an object to be brushed is a second molar (No. 7) and the position of tooth T is in the upper jaw (hereinafter, referred to as a case 7U) belongs.

However, regardless of the classification to which the type or the position of tooth T identified as an object to be brushed by input unit 24 belongs, a form in which the operation of head 10 remains unchanged (that is, regardless of the classification, the operation of head 10 is always the same) is excluded from the present exemplary embodiment.

Next, effects of electric toothbrush 1 will be described.

Electric toothbrush 1 according to the present exemplary embodiment includes head 10 including brush part 10b, drive unit 21 that operates head 10, and input unit 24 that identifies a type or a position of tooth T to be brushed by brush part 10b. Furthermore, electric toothbrush 1 also includes controller 23 that determines which classification based on a specific criterion the type or the position of tooth T identified by input unit 24 belongs to, and controls drive unit 21 to change the operation of head 10 according to the classification.

In other words, electric toothbrush 1 according to the present exemplary embodiment includes:
head 10 including brush part 10b;
drive unit 21 that operates head 10; and
electrical circuitry, which, in operation,
acquires information identifying a type or a position of tooth T to be brushed by brush part 10b, and
determines which classification based on a specific criterion the type or the position of tooth T identified by the information belongs to, and
change the operation of head 10 according to the classification.

Examples of the electrical circuitry are semiconductor devices, such as an integrated circuit (commonly referred to as "IC") or a large scale integrated circuit (commonly referred to as "LSI").

According to electric toothbrush 1, the operation of the head is changed depending on which classification based on a specific criterion the type or the position of tooth T to be brushed belongs to. Therefore, as compared with a case where the operation of the head is not changed depending on the type or the position of tooth T to be brushed, the removal rate of dental plaque represented as dirt to be removed can be optimized for the plurality of teeth T in the oral cavity as a whole.

Furthermore, according to electric toothbrush 1, since the operation of the head is changed according to the classification based on a specific criterion instead of changing the operation of the head with every tooth T, it can be effective to obtain a high dirt removing effect with simple control.

As described above, the present exemplary embodiment provides electric toothbrush 1 that improves the dirt removing effect.

Furthermore, in electric toothbrush 1 according to the present exemplary embodiment, the classification may be based on whether the type of tooth T to be brushed is an incisor or a tooth other than the incisor.

By using above electric toothbrush 1, it is possible to obtain a high dirt removing effect with simpler control.

Furthermore, in electric toothbrush 1 according to the present exemplary embodiment, the classification may be performed further based on whether the position of tooth T to be brushed is on the buccal side, on the lingual side, or on the palate side.

By using above electric toothbrush 1, it is possible to effectively obtain a finer dirt removing effect with simple control.

Furthermore, electric toothbrush 1 according to the present exemplary embodiment may include handle part 20 including drive unit 21. The classification may be further based on whether tooth T to be brushed is on the upper jaw or the lower jaw. The classification may be further based on whether tooth T to be brushed is on the identical side as or on the opposite side of the hand of the user gripping handle part 20.

By using above electric toothbrush 1, it is possible to effectively obtain a more detailed dirt removing effect with simple control.

Furthermore, in electric toothbrush 1 according to the present exemplary embodiment, the operation of head 10 that changes according to the classification may be at least one selected from the group consisting of (i) rotation about an axis along the longitudinal direction of the head as a central axis, and (ii) movement in which the head applies a pressing force to the surface or the gingiva of the tooth.

Electric toothbrush 1 can be particularly effective as an operation of the head for obtaining a high dirt removing effect with simple control. Furthermore, such a head operation may be particularly effective in improving the cleanliness of the periodontal pocket.

Furthermore, in electric toothbrush 1 according to the present exemplary embodiment, input unit 24 may include sensor 25 that detects tooth T to be brushed and detection unit 26 that detects the type or the position of tooth T to be brushed based on an output of sensor 25.

According to electric toothbrush 1, controller 23 can identify tooth T to be brushed in real time in accordance with the tooth brushing action, and promptly reflect identified tooth T in the operation of the head. Therefore, an operational or temporal burden on the user can be reduced.

### (Second exemplary embodiment)

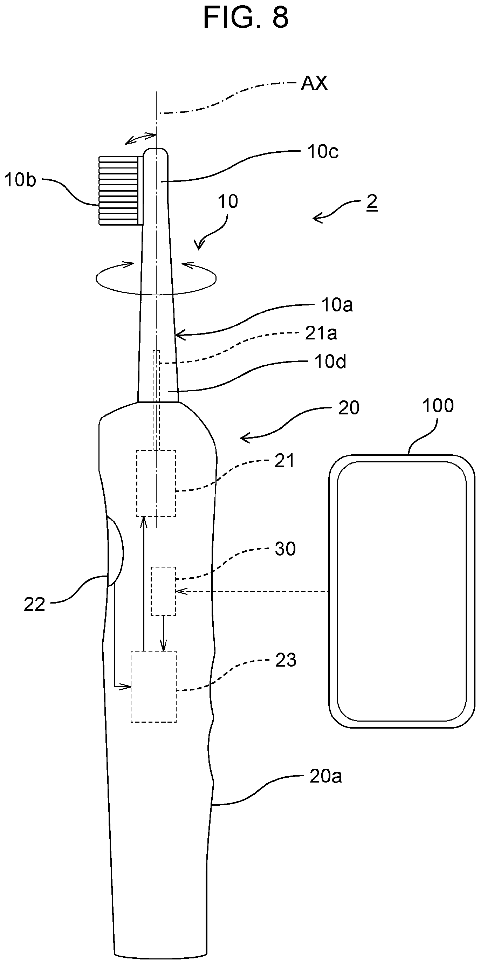

Fig. 8 is a side view illustrating electric toothbrush 2 according to a second exemplary embodiment. In electric toothbrush 2, the same components as those of electric toothbrush 1 according to the first exemplary embodiment are denoted by the same reference marks, and the description thereof will be omitted.

In electric toothbrush 1 according to the first exemplary embodiment, sensor 25 that directly detects tooth T to be brushed is used as input unit 24 that identifies the type or the position of tooth T to be brushed. On the other hand, in electric toothbrush 2 according to the present exemplary embodiment, reception unit 30 that receives information on the type or the position of tooth T to be brushed transmitted from external communication terminal device 100 may be adopted as an input unit in place of input unit 24. Here, communication terminal device 100 may be a so-called smartphone. For example, before the tooth brushing action by electric toothbrush 2, the user inputs tooth T to be brushed from now on from a display screen of communication terminal device 100. Communication terminal device 100 transmits the information, and then, reception unit 30 receives the information. Controller 23 can identify the type or the position of tooth T to be brushed on the basis of the information received by reception unit 30.

On the other hand, reception unit 30 as described above may be installed together with electric toothbrush 1 according to the first exemplary embodiment. In this case, after the user finishes brushing the teeth with electric toothbrush 1, the user inputs tooth T to be treated as finishing from the display screen of communication terminal device 100, and communication terminal device 100 transmits the information. Electric toothbrush 1 including reception unit 30 can perform the tooth brushing action on the basis of the operation of the head suitable for tooth T to be treated as finishing.

Note that, since the above-described exemplary embodiments are intended to illustrate the technique in the present disclosure, various changes, replacements, additions, omissions, and the like can be made within the scope of the claims and equivalents thereof.

### INDUSTRIAL APPLICABILITY

The present disclosure is applicable to all electric toothbrushes for removing teeth dirt.

### REFERENCE MARKS IN THE DRAWINGS

- 1: electric toothbrush
- 10: head
- 10b: brush part
- 20: handle part
- 21: drive unit
- 23: controller
- 24: input unit
- 25: sensor
- 26: detection unit
- 30: reception unit
- 100: communication terminal device
- AX: axis
- T: tooth

## Claims

1. An electric toothbrush comprising:
a head comprising a brush part;
a drive unit that operates the head;
an input unit that identifies a type or a position of a tooth to be brushed by the brush part; and
a controller that determines which classification based on a specific criterion the type or the position of the tooth identified by the input unit belongs to, and controls the drive unit to change an operation of the head according to the classification.

2. The electric toothbrush according to Claim 1, wherein
the classification is based on whether the type of the tooth to be brushed is an incisor or other than the incisor.

3. The electric toothbrush according to Claim 2, wherein
the classification is further based on whether the position of the tooth to be brushed is on a buccal side, on a lingual side, or on a palate side.

4. The electric toothbrush according to Claim 3, further comprising:
a handle part including the drive unit,
wherein
the classification is further based on
whether the tooth to be brushed is on an upper jaw or a lower jaw, or
whether the tooth to be brushed is on an identical side with or on an opposite side to a hand of a user gripping the handle part.

5. The electric toothbrush according to any one of Claims 1 to 4, wherein
the operation of the head that changes according to the classification is at least one selected from the group consisting of:
(i) rotation about an axis in a longitudinal direction of the head as a central axis; and
(ii) movement in which the head applies a pressing force against a surface or gingiva of the tooth.

6. The electric toothbrush according to any one of Claims 1 to 5, wherein the input unit comprises:
a sensor that detects the tooth to be brushed; and
a detection unit that detects a type or a position of the tooth to be brushed based on an output of the sensor.

7. The electric toothbrush according to any one of Claims 1 to 5, wherein the input unit is a reception unit that receives information regarding the type or the position of the tooth to be brushed transmitted from an external communication terminal device.
